# EUROPEAN PATENT APPLICATION

(11) **EP 4 068 284 A1**
(43) Date of publication of application: **05.10.2022**
(21) Application number: 20891582.7
(22) Date of filing: 27.08.2020
(51) Int. Cl.: G10L 21/003

(54) **LIVE BROADCAST AUDIO PROCESSING METHOD AND APPARATUS, AND ELECTRONIC DEVICE AND STORAGE MEDIUM**

(30) Priority: 28.11.2019 CN 201911191671
(71) Applicant: Beijing Dajia Internet Information Technology Co., Ltd., Beijing 100085 (CN)
(72) Inventor: ZHANG, Chen, Beijing 100085 (CN); XING, Wenhao, Beijing 100085 (CN)
(74) Representative: Mathys & Squire
(86) International application number: PCT/CN2020/111873
(87) International publication number: WO 2021/103710

(57) **Abstract**

A live broadcast audio processing method and apparatus, and an electronic device and a storage medium. The method is applied to an anchor end, and comprises: acquiring a first audio signal formed by means of mixing a guest audio signal and a background audio signal of an anchor end to perform echo cancellation (S204); monitoring a voice activity state of a guest end according to the guest audio signal, the first audio signal and the processed first audio signal (S206); performing echo cancellation on a mixed audio signal according to different voice activity states and the first audio signal (S208); and synthesizing the first audio signal that has been subjected to echo cancellation and the mixed audio signal, and pushing the synthesized signal to the guest end (S210). By using the method, an echo processing mode for a sound signal collected by a microphone of an anchor end can be adjusted according to a voice activity state of a guest end and by means of cooperative work of two channels of echo cancellation, such that an audio signal of the anchor is not excessively processed, thereby improving the sound quality of the voice of the anchor heard by the guest end.

## Description

### Cross-Reference of Related Applications

This application claims priority to Chinese Patent Application No. 201911191671.X, filed with the China National Intellectual Property Administration on November 28, 2019 and entitled "Live Broadcast Audio Processing Method and Apparatus, Electronic Device and Storage Medium", the disclosure of which is herein incorporated by reference in its entirety.

### Field

The present application relates to the field of audio processing technology, and particularly to a method and apparatus for processing live stream audio, an electronic device and a storage medium.

### Background

The live stream partner refers to an auxiliary live stream tool of the live stream platforms and live stream software. With more and more types of live stream platforms and live stream software, various live stream partners also appear. The live stream partner may assist the live stream very well, and may provide functions such as desktop sound effect, screen capture, picture quality adjustment, picture-in-picture, high-definition large screen, massive song library, intelligent special effect and audio and video recording, to make the live stream easy and smooth.

Adding a microphone connection function to the live stream partner can realize a microphone connection between the live streamer and other guests, to push an audio signal of the live streamer end to the guest end in microphone connection. In some scenarios, if the live streamer end plays background music, it is also necessary to push the background music to the guest end in microphone connection. When the live streamer end uses a microphone to collect a live streamer voice signal and the background music, the microphone also collects voice signals of the guest in microphone connection from the speaker, so that the guest can hear his own voice. Therefore, it is necessary during the push process to perform echo cancellation on the voice signals of the guest in microphone connection obtained by the microphone of the live streamer end. The inventors realize that the existing echo cancellation method tends to excessively cancel the voice signals of the live streamer so that the voice quality of the live streamer's voice heard by the guest end in microphone connection is poor.

### Summary

The present application provides a method and apparatus for processing live stream audio, an electronic device and a storage medium, to at least solve the problem of poor voice quality of the live streamer's voice heard by the guest end in microphone connection in the related art. Technical solutions of embodiments of the present application are as follows.

According to a first aspect of embodiments of the present application, a method for processing live stream audio is provided, the method is applied to a live streamer end and includes: obtaining a first audio signal formed by mixing a guest audio signal with a background audio signal of the live streamer end; obtaining a processed first audio signal by performing echo cancellation on the guest audio signal in the first audio signal; detecting a voice activity state of a guest end according to the guest audio signal, the first audio signal and the processed first audio signal; obtaining a processed mixed audio signal by performing echo cancellation on the first audio signal in a mixed audio signal according to the voice activity state and the first audio signal, where the mixed audio signal is a signal consisted of the first audio signal and a live streamer audio signal collected by a microphone of the live streamer end; synthesizing and pushing the processed first audio signal and the processed mixed audio signal to the guest end.

According to a second aspect of embodiments of the present application, an apparatus for processing live stream audio is provided, the apparatus includes: a first audio signal obtaining module configured to obtain a first audio signal formed by mixing a guest audio signal with a background audio signal of the live streamer end; a first echo cancellation module configured to obtain a processed first audio signal by performing echo cancellation on the guest audio signal in the first audio signal; a voice activity state detection module configured to detect a voice activity state of a guest end according to the guest audio signal, the first audio signal and the processed first audio signal; a second echo cancellation module configured to obtain a processed mixed audio signal by performing echo cancellation on the first audio signal in a mixed audio signal according to the voice activity state and the first audio signal, where the mixed audio signal is a signal consisted of the first audio signal and a live streamer audio signal collected by a microphone of the live streamer end; a second audio signal synthesis module configured to synthesize and push the processed first audio signal and the processed mixed audio signal to the guest end.

According to a third aspect of embodiments of the present application, an electronic device is provided, the electronic device includes: a processor; and a memory configured to store instructions executable by the processor; where the processor is configured to execute the instructions to implement the steps of the above method.

According to a fourth aspect of embodiments of the present application, a storage medium is provided. When instructions in the storage medium are executed by a processor of an electronic device, the electronic device can perform the steps of the above method.

According to a fifth aspect of embodiments of the present application, there is provided a computer program product that, when executed on a data processing device, is adapted to execute a program initialized with the steps of the above method.

In the present application, by using two channels of echo cancellation to work in cooperation, the echo processing method of the sound signal collected by the microphone of the live streamer end is adjusted according to the voice activity state of the guest end, so that the live streamer audio signal of the live streamer end cannot be processed excessively, thus protecting the live streamer audio signal and improving the voice quality of the live streamer's voice heard by the guest end.

### Brief Description of the Drawings

The accompanying drawings here are incorporated into and constitute a part of the specification, illustrate embodiments conforming to the present application, and serve to explain principles of embodiments of the present application together with the specification but not constitute an improper limitation on embodiments of the present application.
Fig. 1 is an application environment diagram of a method for processing live stream audio in an embodiment;
Fig. 2 is a schematic flowchart of a method for processing live stream audio in an embodiment;
Fig. 3 is a schematic diagram of a process of determining a voice activity state of a guest end in an embodiment;
Fig. 4 is a schematic flowchart of echo cancellation of a voice signal of the live streamer end when the guest end is in the voice state in an embodiment;
Fig. 5 is a schematic flowchart of a method for processing live stream audio in an embodiment;
Fig. 6 is a structural block diagram of an apparatus for processing live stream audio in an embodiment;
Fig. 7 is an internal structure diagram of an electronic device in an embodiment.

### Detailed Description of Embodiments

In order to enable those ordinary skilled in the art to better understand technical solutions of embodiments of the present application, the technical solutions in embodiments of the present application will be described clearly and completely with reference to the accompanying drawings.

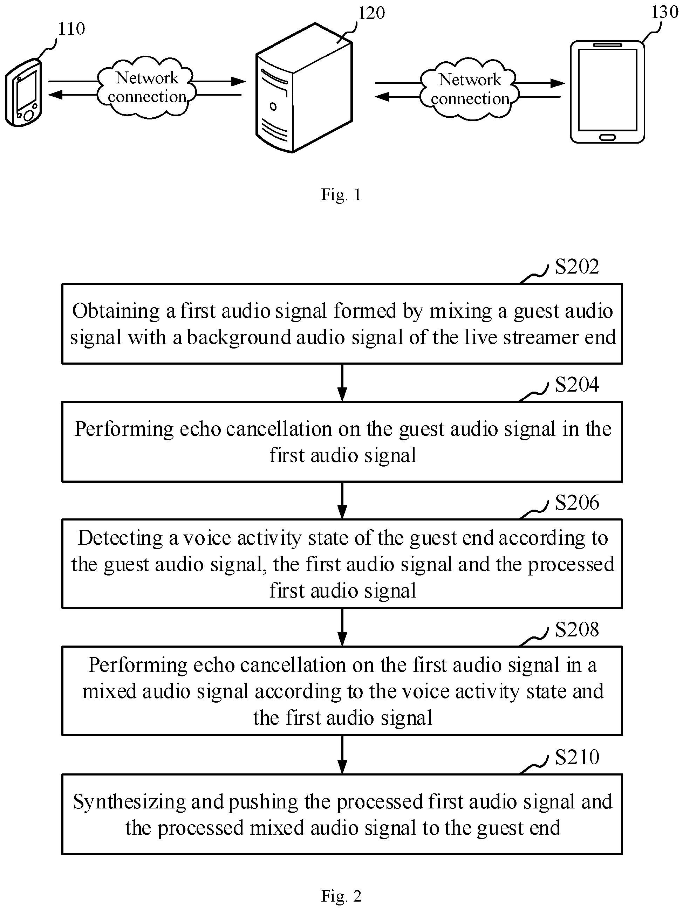

A method for processing live stream audio provided by an embodiment of the present application can be applied to the application environment as shown in Fig. 1. The application environment includes a live streamer end 110, a server 120 and a guest end 130. The live streamer end 110 communicates with the server 120 through a network, and the guest end 130 communicates with the server 120 through a network. The live streamer end 110 may be installed with applications or plug-ins such as live stream partner in advance, so that the live streamer end 110 can perform entertainment live stream or game live stream through these applications or plug-ins. During the live stream, the applications or plug-ins installed on the live streamer end 110 may adjust the method for performing echo cancellation on the voice signal collected by a microphone of the live streamer end 110 according to the real-time voice activity state of the guest end 130, so that the audio signal of the live streamer end 110 cannot be eliminated excessively, thereby protecting the voice quality of the voice of the live streamer end 110. The live streamer end 110 mixes an obtained guest audio signal with a background audio signal of the live streamer end to form a first audio signal. The live streamer end 110 obtains a processed first audio signal by performing echo cancellation on the guest audio signal in the first audio signal, then detects the voice activity state of the guest end according to the guest audio signal, the first audio signal and the processed first audio signal, and obtains a processed mixed audio signal by performing echo cancellation on the first audio signal in a mixed audio signal according to the voice activity state and the first audio signal. The live streamer end 110 synthesizes and pushes the processed first audio signal and the processed mixed audio signal to the guest end 130. Here, the live streamer end 110 and the guest end 130 may be, but are not limited to, various personal computers, notebook computers, smart phones, tablet computers and portable wearable devices, and the server 120 may be implemented by an independent server or a server cluster consisted of a plurality of servers.

In an embodiment, as shown in Fig. 2, a method for processing live stream audio is provided. This method is applied to the live streamer end 110 in Fig. 1 as an example for description, and includes following steps.

Step 202: obtaining a first audio signal formed by mixing a guest audio signal with a background audio signal of the live streamer end.

Here, the guest audio signal may be a guest vocal signal. The background audio signal of the live streamer end may be the background music played locally by the live streamer end, such as game music or karaoke music in microphone connection. After receiving the guest audio signal and the locally-played background audio signal, the live streamer end may form the first audio signal by mixing the guest audio signal with the background audio signal.

Step 204: obtaining a processed first audio signal by performing echo cancellation on the guest audio signal in the first audio signal.

Since the background audio signal obtained by the player cannot be directly pushed to the guest end, the echo cancellation may be performed on the first audio signal after the first audio signal is obtained, to eliminate the guest audio signal from the first audio signal and obtain the background audio signal. In an embodiment of the present application, the echo cancellation may be performed on the first audio signal through acoustic echo cancellation.

Step 206: detecting a voice activity state of the guest end according to the guest audio signal, the first audio signal and the processed first audio signal.

Here, the Voice Activity Detection (VAD) of the voice activity state of the guest end may refer to detecting whether there is voice on the current guest end, for example, whether the guest in microphone connection is speaking. If the guest end is currently in the speaking state, it can be considered that the voice activity state is the voice state; if the guest end is not currently in the speaking state, it can be considered that the voice activity state is the mute state. The voice activity state may be detected by a threshold discrimination algorithm, a model matching algorithm or the like. Taking the threshold discrimination algorithm as an example, the voice activity state of the guest end may be determined by detecting the audio energy in the received guest audio frame with a certain period of time. At the same time, it is also possible to further detect the energy of the first audio frame before echo cancellation (that is, the audio synthesized by the guest audio signal and the background audio signal of the live streamer end) and the energy of the first audio frame after echo cancellation (that is, the background audio signal obtained after echo cancellation) for a certain period of time, to determine the voice activity state of the guest end, thereby improving the accuracy in determining the voice activity state.

Step 208: obtaining a processed mixed audio signal by performing echo cancellation on the first audio signal in a mixed audio signal according to the voice activity state and the first audio signal.

The mixed audio signal is a signal consisted of the first audio signal and the live streamer audio signal collected by the microphone of the live streamer end.

The echo in the sound signal collected by the microphone of the live streamer end is mainly generated by the first audio signal. If the echo of the background audio signal in the first audio signal is not completely eliminated, the echo may be masked by the in-mixed background audio signal. Therefore, the echo of the guest audio signal in the first audio signal is mainly the echo that needs to be completely eliminated. Thus, different degrees of echo cancellation may be performed on the mixed audio signal collected by the microphone according to the voice activity state of the guest end. In response to detecting that the voice activity state of the guest end is the silent or mute state, a lighter degree of echo cancellation may be applied to the mixed audio signal, to eliminate the first audio signal from the mixed audio signal and obtain the live streamer audio signal; in response to detecting the voice activity state of the guest end is the speaking or voice state, a stronger degree of echo cancellation may be applied to the mixed audio signal in order to completely eliminate the echo of the guest audio signal.

Step 210: synthesizing and pushing the processed first audio signal and the processed mixed audio signal to the guest end.

After the background audio signal is obtained by performing echo cancellation on the first audio signal and the live streamer audio signal is obtained by performing echo cancellation on the mixed audio signal collected by the microphone of the live streamer end, the obtained background audio signal and live streamer audio signal may be mixed and pushed to the guest end.

In the method for processing live stream audio described above, the way to perform echo cancellation on the mixed audio signal consisted of the first audio signal and the live streamer audio signal collected by the microphone of the live streamer end is adjusted according to the voice activity state of the guest end, and the echo cancellation is performed on the first audio signal in the mixed audio signal in this way, so that the live streamer audio signal of the live streamer end cannot be processed excessively, thus protecting the live streamer audio signal and improving the voice quality of the live streamer's voice heard by the guest end.

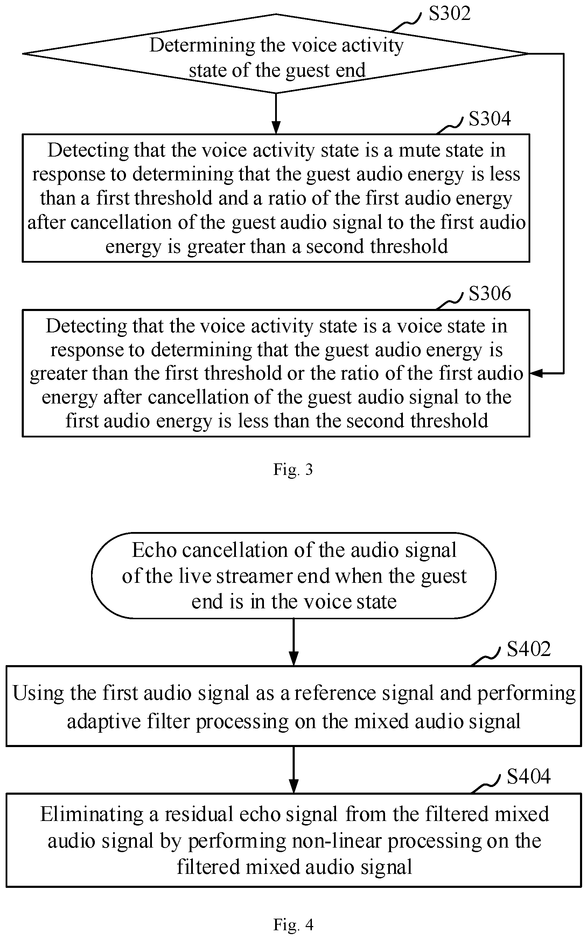

In an embodiment, as shown in Fig. 3, the step of detecting the voice activity state of the guest end according to the guest audio signal, the first audio signal and the processed first audio signal includes following steps.

Step 302: calculating the guest audio energy, first audio energy and processed first audio energy respectively according to the guest audio signal, the first audio signal and the processed first audio signal.

In an embodiment of the present application, a threshold discrimination algorithm may be used to detect the voice activity state of the guest end. The guest audio energy, the first audio energy and the processed first audio energy (i.e., the background audio energy obtained after echo cancellation) of one audio frame may be measured by the following formula.

Where, represents an energy of an n^{th} audio frame; L represents a length of the audio frame, and may be but not limited to being set as 20ms; S represents an audio signal.

Step 304: detecting that the voice activity state is a mute state in response to determining that the guest audio energy is less than a first threshold and a ratio of the processed first audio energy to the first audio energy is greater than a second threshold.

It is assumed that the guest audio energy of the n^{th} audio frame is measured as El, the first audio energy is Ein, the processed first audio energy is Eout, the first threshold is Th1, and the second threshold is Th2. If it is determined that E1<Th1, it can be considered that the guest end is in the mute state at this time. Further, continuing to determine that the ratio Eout/Ein of the processed first audio energy Eout to the first audio energy Ein is greater than Th2, it can be considered that the guest audio signal in the first audio signal accounts for very little, that is, the guest audio signal received by the live streamer end is very little. Therefore, it can be determined that the guest end is in the mute state at this time.

Step 306: detecting that the voice activity state is a voice state in response to determining that the guest audio energy is greater than the first threshold or the ratio of the processed first audio energy to the first audio energy is less than the second threshold.

If it is determined that E1>Th1, it can be considered that the guest end is in the voice state at this time. Further, continuing to determine that the ratio Eout/Ein of the processed first audio energy Eout to the first audio energy Ein is less than Th2, it can be considered that the guest audio signal in the first audio signal accounts for a larger proportion, that is, the guest audio signal received by the live streamer end is relatively more. Therefore, it can be determined that the guest end is in the voice state at this time. In an embodiment of the present application, the first threshold Th1 may be but not limited to 0.001, and Th2 may be but not limited to 0.9.

In an embodiment of the present application, by determining the voice activity state of the guest end according to the guest audio energy and the audio energy received by the live streamer end before and after echo cancellation, the accuracy of the detection of the voice activity state can be improved.

In an embodiment, the step of obtaining the processed mixed audio signal by performing echo cancellation on the first audio signal in the mixed audio signal according to the voice activity state and the first audio signal includes: filtering the first audio signal in the mixed audio signal by using the first audio signal as a reference signal and performing adaptive filter processing on the mixed audio signal in response to detecting that the voice activity state is the mute state.

If it is detected that the guest end is in the mute state, it can be considered that there is no or very little echo of the guest audio signal in the mixed audio signal collected by the microphone of the live streamer end at this time, and then an adaptive filter may be used to perform a lighter degree of echo cancellation on the mixed audio signal. Taking the first audio signal as a reference signal, the estimated value of an echo signal collected by the microphone is obtained through linear superposition. By subtracting the estimated value of the echo signal from the mixed audio signal collected by the microphone, the live streamer audio signal may be obtained by performing the echo cancellation on the mixed audio signal. Further, if there is very little echo of the guest audio signal in the mixed audio signal collected by the live streamer end, the echo of the guest audio signal cannot be completely eliminated through adaptive filtering due to the deviation between the estimated value of the echo signal obtained through linear superposition and the guest audio signal collected by the microphone. In this case, a mild Non-Linear Process (NLP) may be applied to the filtered mixed audio signal, which can not only completely eliminate the echo of the guest audio signal but also protect the voice quality of the live streamer end. In an embodiment of the present application, when the guest end is in the mute state, the audio signal of the live streamer end can be protected by performing lightweight echo cancellation on the sound signal collected by the microphone, thereby improving the voice quality of the live streamer's voice heard by the guest end.

In an embodiment, as shown in Fig. 4, the step of obtaining the processed mixed audio signal by performing echo cancellation on the first audio signal in the mixed audio signal according to the voice activity state and the first audio signal includes following steps.

Step 402: obtaining a filtered mixed audio signal by using the first audio signal as a reference signal and performing adaptive filter processing on the mixed audio signal in response to detecting that the voice activity state is the voice state.

If it is detected that the guest end is in the voice state, it can be considered that there is a strong degree of echo of the guest audio signal in the mixed audio signal collected by the microphone of the live streamer end at this time, and then a stronger degree of echo cancellation may be performed on the mixed audio signal. Firstly, the first audio signal may be used as a reference signal, and the estimated value of an echo signal collected by the microphone is obtained through adaptive filtering and linear superposition. The estimated value of the echo signal is subtracted from the mixed audio signal collected by the microphone, to filter the mixed audio signal.

Step 404: eliminating a residual echo signal from the filtered mixed audio signal by performing non-linear processing on the filtered mixed audio signal.

Due to the deviation between the estimated value of the echo signal obtained through linear superposition and the guest audio signal collected by the microphone, the echo of the guest audio signal cannot be completely eliminated through adaptive filtering, and there will be residual echo. The residual echo signal may be further eliminated by performing non-linear processing on the filtered mixed audio signal. The input of the non-linear processing includes two signals, where one is the residual echo signal after adaptive filtering and linear processing, which may be denoted as err; and the other is the echo signal estimated by adaptive filtering, which may be denoted as echo. The err and echo are transformed to frequency domain signals by Fourier FFT, i.e., a signal-to-noise ratio Snr(k) of the Err and Echo magnitude spectrum may be then calculated. If the signal-to-noise ratio Snr(k) of a certain frequency point k is low, it can be considered that the input is mainly the residual echo signal, and then Err(k) is weighted with a low gain; if the Snr(k) of the certain frequency point k is high, it can be considered that the input is mainly the audio signal of the live streamer end, and then Err(k) is weighted with a high gain. Finally, a weighted Err' is transformed to the time domain by inverse Fourier transform, that is, the residual echo is further removed from an output err' signal.

In an embodiment of the present application, when the guest end is in the voice state, the interference of the echo of the guest audio signal can be completely eliminated by performing a stronger degree of echo cancellation on the sound signal collected by the microphone.

In an embodiment, the step of obtaining the processed first audio signal by performing echo cancellation on the guest audio signal in the first audio signal includes: obtaining the processed first audio signal by using the guest audio signal as a reference signal, and performing adaptive filter processing on the first audio signal.

An adaptive filter may be used to perform echo cancellation on the first audio signal received by the player of the live streamer end. Taking the guest audio signal as a reference signal, the estimated value of the obtained echo signal may be obtained through linear superposition. By subtracting the estimated value of the echo signal from the obtained first audio signal, the echo cancellation can be performed on the first audio signal, thereby separating and obtaining the background audio signal.

In an embodiment, after obtaining the processed mixed audio signal by performing echo cancellation on the first audio signal in the mixed audio signal according to the voice activity state and the first audio signal, the method further includes: synthesizing and pushing the first audio signal and the processed mixed audio signal to an audience end.

The live stream scene also includes the audience end. The processed mixed audio signal (i.e., the live streamer audio signal obtained by echo cancellation) and the first audio signal (i.e., the guest audio signal and the background audio signal of the live streamer end) may be mixed to obtain an audio signal pushed to the audience end. This not only enables the audience to hear the live streamer audio signal, the guest audio signal and the background audio signal of the live streamer end at the same time, but also improves the sound quality of the sound heard by the audience.

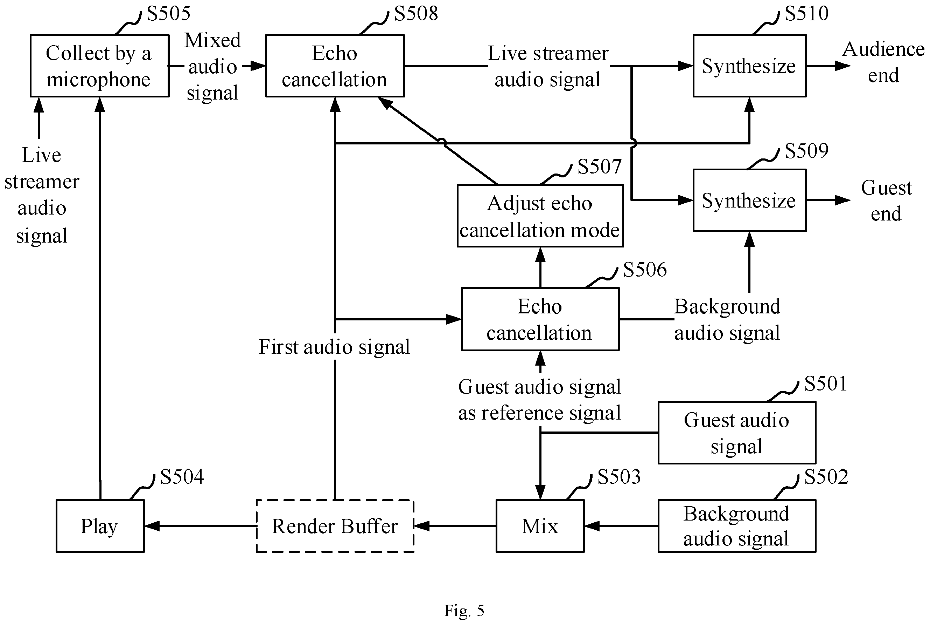

In an embodiment, as shown in Fig. 5, a method for processing live stream audio is described by an embodiment, including following steps 501 to 510.

Step 501: obtaining a guest audio signal.

Step 502: obtaining a background audio signal played by a player of a live streamer end.

Step 503: forming a first audio signal by mixing the obtained guest audio signal and background audio signal.

Step 504, playing the first audio signal through an external speaker.

Step 505: obtaining a mixed audio signal by collecting the first audio signal and a live streamer audio signal through a microphone.

Step 506: obtaining a processed first audio signal (i.e., the background audio signal) by performing echo cancellation on the guest audio signal in the first audio signal.

The processed first audio signal is obtained by using the guest audio signal as a reference signal, and performing adaptive filter processing on the first audio signal.

Step 507: detecting a voice activity state of a guest end. According to different voice activity states, the method for performing echo cancellation on the mixed audio signal consisted of the first audio signal and the live streamer audio signal collected by the microphone is adjusted.

The voice activity state of the guest end may be detected according to the guest audio energy, the first audio energy and the processed first audio energy. In response to determining that the guest audio energy is less than a first threshold and a ratio of the processed first audio energy to the first audio energy is greater than a second threshold, the voice activity state is detected as a mute state; in response to determining that the guest audio energy is greater than the first threshold or the ratio of the processed first audio energy to the first audio energy is less than the second threshold, the voice activity state is detected as a voice state.

Step 508: obtaining a processed mixed audio signal by performing echo cancellation on the first audio signal in the mixed audio signal.

In response to detecting that the voice activity state is the mute state, the first audio signal in the mixed audio signal is filtered by using the first audio signal as a reference signal, and performing adaptive filter processing on the mixed audio signal. In response to detecting that the voice activity state is the voice state, a filtered mixed audio signal is obtained by using the first audio signal as a reference signal, and performing adaptive filter processing on the mixed audio signal; and a residual echo signal is eliminated from the filtered mixed audio signal by performing non-linear processing on the filtered mixed audio signal.

Step 509: synthesizing and pushing the processed first audio signal and the processed mixed audio signal to the guest end.

Step 510: synthesizing and pushing the first audio signal and the processed mixed audio signal to an audience end.

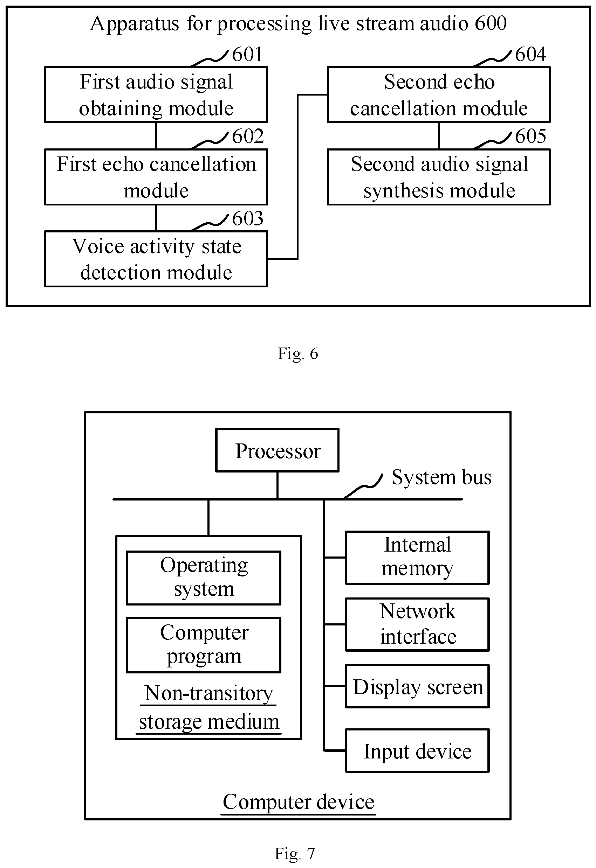

In an embodiment, as shown in Fig. 6, an apparatus for processing live stream audio 600 is provided. The apparatus includes: a first audio signal obtaining module 601, a first echo cancellation module 602, a voice activity state detection module 603, a second echo cancellation module 604 and a second audio signal synthesis module 605.

The first audio signal obtaining module 601 is configured to obtain a first audio signal formed by mixing a guest audio signal with a background audio signal of the live streamer end.

The first echo cancellation module 602 is configured to obtain a processed first audio signal by performing echo cancellation on the guest audio signal in the first audio signal.

The voice activity state detection module 603 is configured to detect a voice activity state of a guest end according to the guest audio signal, the first audio signal and the processed first audio signal.

The second echo cancellation module 604 is configured to obtain a processed mixed audio signal by performing echo cancellation on the first audio signal in a mixed audio signal according to the voice activity state and the first audio signal.

The second audio signal synthesis module 605 is configured to synthesize and push the processed first audio signal and the processed mixed audio signal to the guest end.

In an embodiment, the voice activity state detection module 603 is further configured to: calculate guest audio energy, first audio energy and processed first audio energy respectively according to the guest audio signal, the first audio signal and the processed first audio signal; detect that the voice activity state is a mute state in response to determining that the guest audio energy is less than a first threshold and a ratio of the processed first audio energy to the first audio energy is greater than a second threshold; and detect that the voice activity state is a voice state in response to determining that the guest audio energy is greater than the first threshold or the ratio of the processed first audio energy to the first audio energy is less than the second threshold.

In an embodiment, the second echo cancellation module 604 is configured to: filter the first audio signal in the mixed audio signal by using the first audio signal as a reference signal and performing adaptive filter processing on the mixed audio signal in response to detecting that the voice activity state is the mute state.

In an embodiment, the second echo cancellation module 604 is configured to: obtain a filtered mixed audio signal by using the first audio signal as a reference signal and performing adaptive filter processing on the mixed audio signal in response to detecting that the voice activity state is the voice state; and eliminate a residual echo signal from the filtered mixed audio signal by performing non-linear processing on the filtered mixed audio signal.

In an embodiment, the first echo cancellation module 602 is configured to: obtain the processed first audio signal by using the guest audio signal as a reference signal, and performing adaptive filter processing on the first audio signal.

In an embodiment, the apparatus for processing live stream audio 600 further includes a third audio signal synthesis module configured to: synthesize and push the first audio signal and the processed mixed audio signal to an audience end.

In an embodiment, an electronic device is provided, and the electronic device may be a terminal, and an internal structure diagram of the electronic device may be as shown in Fig. 7. The electronic device includes a processor, a memory, a network interface, a display screen and an input device connected by a system bus. Here, the processor of the electronic device is used to provide computing and control capabilities. The memory of the electronic device includes a non-transitory storage medium and an internal memory. The non-transitory storage medium stores an operating system and instructions. The internal memory provides an environment for the execution of the operating system and instructions in the non-transitory storage medium. The network interface of the electronic device is used to communicate with an external terminal through a network connection. The instructions implement a method for processing live stream audio when executed by the processor. The display screen of the electronic device may be a liquid crystal display screen or an electronic ink display screen; and the input device of the electronic device may be a touch layer covered on the display screen, or may be a button, a trackball or a touchpad set on the shell of the electronic device, or may be an external keyboard, trackpad or mouse, etc.

In an embodiment, an electronic device is provided, including a memory and a processor, where the memory stores instructions executable by the processor, and the processor implements following steps when executing the instructions: obtaining a first audio signal formed by mixing a guest audio signal with a background audio signal of the live streamer end; obtaining a processed first audio signal by performing echo cancellation on the guest audio signal in the first audio signal; detecting a voice activity state of a guest end according to the guest audio signal, the first audio signal and the processed first audio signal; obtaining a processed mixed audio signal by performing echo cancellation on the first audio signal in a mixed audio signal according to the voice activity state and the first audio signal; and synthesizing and pushing the processed first audio signal and the processed mixed audio signal to the guest end.

In an embodiment, the processor further implements following steps when executing the instructions: calculating guest audio energy, first audio energy and processed first audio energy respectively according to the guest audio signal, the first audio signal and the processed first audio signal; detecting that the voice activity state is a mute state in response to determining that the guest audio energy is less than a first threshold and a ratio of the processed first audio energy to the first audio energy is greater than a second threshold; and detecting that the voice activity state is a voice state in response to determining that the guest audio energy is greater than the first threshold or the ratio of the processed first audio energy to the first audio energy is less than the second threshold.

In an embodiment, the processor further implements following steps when executing the instructions: filtering the first audio signal in the mixed audio signal by using the first audio signal as a reference signal and performing adaptive filter processing on the mixed audio signal in response to detecting that the voice activity state is the mute state.

In an embodiment, the processor further implements following steps when executing the instructions: obtaining a filtered mixed audio signal by using the first audio signal as a reference signal and performing adaptive filter processing on the mixed audio signal in response to detecting that the voice activity state is the voice state; and eliminating a residual echo signal from the filtered mixed audio signal by performing non-linear processing on the filtered mixed audio signal.

In an embodiment, the processor further implements following steps when executing the instructions: obtaining the processed first audio signal by using the guest audio signal as a reference signal, and performing adaptive filter processing on the first audio signal.

In an embodiment, the processor further implements following steps when executing the instructions: synthesizing and pushing the first audio signal and the processed mixed audio signal to an audience end.

In an embodiment, there is provided a storage medium on which processor-executable instructions are stored, where the instructions, when executed by a processor, implement following steps: obtaining a first audio signal formed by mixing a guest audio signal with a background audio signal of the live streamer end; obtaining a processed first audio signal by performing echo cancellation on the guest audio signal in the first audio signal; detecting a voice activity state of a guest end according to the guest audio signal, the first audio signal and the processed first audio signal; obtaining a processed mixed audio signal by performing echo cancellation on the first audio signal in a mixed audio signal according to the voice activity state and the first audio signal; and synthesizing and pushing the processed first audio signal and the processed mixed audio signal to the guest end.

In an embodiment, the instructions, when executed by the processor, further implement following steps: calculating guest audio energy, first audio energy and processed first audio energy respectively according to the guest audio signal, the first audio signal and the processed first audio signal; detecting that the voice activity state is a mute state in response to determining that the guest audio energy is less than a first threshold and a ratio of the processed first audio energy to the first audio energy is greater than a second threshold; and detecting that the voice activity state is a voice state in response to determining that the guest audio energy is greater than the first threshold or the ratio of the processed first audio energy to the first audio energy is less than the second threshold.

In an embodiment, the instructions, when executed by the processor, further implement following steps: filtering the first audio signal in the mixed audio signal by using the first audio signal as a reference signal and performing adaptive filter processing on the mixed audio signal in response to detecting that the voice activity state is the mute state.

In an embodiment, the instructions, when executed by the processor, further implement following steps: obtaining a filtered mixed audio signal by using the first audio signal as a reference signal and performing adaptive filter processing on the mixed audio signal in response to detecting that the voice activity state is the voice state; and eliminating a residual echo signal from the filtered mixed audio signal by performing non-linear processing on the filtered mixed audio signal.

In an embodiment, the instructions, when executed by the processor, further implement following steps: obtaining the processed first audio signal by using the guest audio signal as a reference signal, and performing adaptive filter processing on the first audio signal.

In an embodiment, the instructions, when executed by the processor, further implement following steps: synthesizing and pushing the first audio signal and the processed mixed audio signal to an audience end.

In an embodiment, there is also provided a computer program product that, when executed on a data processing device, is adapted to execute a program initialized with following method steps: obtaining a first audio signal formed by mixing a guest audio signal with a background audio signal of the live streamer end; obtaining a processed first audio signal by performing echo cancellation on the guest audio signal in the first audio signal; detecting a voice activity state of a guest end according to the guest audio signal, the first audio signal and the processed first audio signal; obtaining a processed mixed audio signal by performing echo cancellation on the first audio signal in a mixed audio signal according to the voice activity state and the first audio signal; and synthesizing and pushing the processed first audio signal and the processed mixed audio signal to the guest end.

It can be understood by those ordinary skilled in the art that the implementation of all or some of the processes in the method of above embodiments may be completed by instructions, and the instructions may be stored in a non-transitory computer readable storage medium and may include the process of each method embodiment described above when the instructions are executed. Here, any reference to memory, storage, database or other media used in various embodiments provided by embodiments of the present application may include non-transitory and/or transitory memories. The non-transitory memory may include Read-Only Memory (ROM), Programmable Read-Only Memory (PROM), Electrically Programmable Read-Only Memory (EPROM), Electrically Erasable Programmable Read-Only Memory (EEPROM) or flash memory. The transitory memory may include Random Access Memory (RAM) or external cache memory. By way of illustration and not limitation, the RAM is available in various forms, such as Static Random Access Memory (SRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Sync Link Dynamic Random Access Memory (SLDRAM), Direct Rambus Dynamic Random Access Memory (DRDRAM), Direct Rambus Dynamic Random Access Memory (DRDRAM), and Rambus Dynamic Random Access Memory (RDRAM), etc.

## Claims

1. A method for processing live stream audio, applied to a live streamer end, the method comprising:
obtaining a first audio signal formed by mixing a guest audio signal with a background audio signal of the live streamer end;
obtaining a processed first audio signal by performing echo cancellation on the guest audio signal in the first audio signal according to the guest audio signal;
detecting a voice activity state of a guest end according to the guest audio signal, the first audio signal and the processed first audio signal;
obtaining a processed mixed audio signal by performing echo cancellation on the first audio signal in a mixed audio signal according to the voice activity state and the first audio signal, wherein the mixed audio signal is a signal consisted of the first audio signal and a live streamer audio signal collected by a microphone of the live streamer end;
synthesizing and pushing the processed first audio signal and the processed mixed audio signal to the guest end.

2. The method according to claim 1, wherein said detecting the voice activity state of the guest end according to the guest audio signal, the first audio signal and the processed first audio signal, comprises:
calculating guest audio energy, first audio energy and processed first audio energy respectively according to the guest audio signal, the first audio signal and the processed first audio signal;
detecting that the voice activity state is a mute state in response to determining that the guest audio energy is less than a first threshold and a ratio of the processed first audio energy to the first audio energy is greater than a second threshold;
detecting that the voice activity state is a voice state in response to determining that the guest audio energy is greater than the first threshold or the ratio of the processed first audio energy to the first audio energy is less than the second threshold.

3. The method according to claim 2, wherein said obtaining the processed mixed audio signal by performing echo cancellation on the first audio signal in the mixed audio signal according to the voice activity state and the first audio signal, comprises:
filtering the first audio signal in the mixed audio signal by using the first audio signal as a reference signal and performing adaptive filter processing on the mixed audio signal in response to detecting that the voice activity state is the mute state.

4. The method according to claim 2, wherein said obtaining the processed mixed audio signal by performing echo cancellation on the first audio signal in the mixed audio signal according to the voice activity state and the first audio signal, comprises:
obtaining a filtered mixed audio signal by using the first audio signal as a reference signal and performing adaptive filter processing on the mixed audio signal in response to detecting that the voice activity state is the voice state;
eliminating a residual echo signal from the filtered mixed audio signal by performing non-linear processing on the filtered mixed audio signal.

5. The method according to claim 1, wherein said obtaining the processed first audio signal by performing echo cancellation on the guest audio signal in the first audio signal, comprises:
obtaining the processed first audio signal by using the guest audio signal as a reference signal, and performing adaptive filter processing on the first audio signal.

6. The method according to claim 1, wherein after obtaining the processed mixed audio signal by performing echo cancellation on the first audio signal in the mixed audio signal according to the voice activity state and the first audio signal, the method further comprises:
synthesizing and pushing the first audio signal and the processed mixed audio signal to an audience end.

7. An apparatus for processing live stream audio, applied to a live streamer end, the apparatus comprising:
a first audio signal obtaining module configured to obtain a first audio signal formed by mixing a guest audio signal with a background audio signal of the live streamer end;
a first echo cancellation module configured to obtain a processed first audio signal by performing echo cancellation on the guest audio signal in the first audio signal according to the guest audio signal;
a voice activity state detection module configured to detect a voice activity state of a guest end according to the guest audio signal, the first audio signal and the processed first audio signal;
a second echo cancellation module configured to obtain a processed mixed audio signal by performing echo cancellation on the first audio signal in a mixed audio signal according to the voice activity state and the first audio signal, wherein the mixed audio signal is a signal consisted of the first audio signal and a live streamer audio signal collected by a microphone of the live streamer end;
a second audio signal synthesis module configured to synthesize and push the processed first audio signal and the processed mixed audio signal to the guest end.

8. The apparatus according to claim 7, wherein the voice activity state detection module is further configured to:
calculate guest audio energy, first audio energy and processed first audio energy respectively according to the guest audio signal, the first audio signal and the processed first audio signal;
detect that the voice activity state is a mute state in response to determining that the guest audio energy is less than a first threshold and a ratio of the processed first audio energy to the first audio energy is greater than a second threshold;
detect that the voice activity state is a voice state in response to determining that the guest audio energy is greater than the first threshold or the ratio of the processed first audio energy to the first audio energy is less than the second threshold.

9. The apparatus according to claim 8, wherein the voice activity state detection module is further configured to:
filter the first audio signal in the mixed audio signal by using the first audio signal as a reference signal and performing adaptive filter processing on the mixed audio signal in response to detecting that the voice activity state is the mute state.

10. The apparatus according to claim 8, wherein the voice activity state detection module is further configured to:
obtain a filtered mixed audio signal by using the first audio signal as a reference signal and performing adaptive filter processing on the mixed audio signal in response to detecting that the voice activity state is the voice state;
eliminate a residual echo signal from the filtered mixed audio signal by performing non-linear processing on the filtered mixed audio signal.

11. The apparatus according to claim 7, wherein the first echo cancellation module is further configured to:
obtain the processed first audio signal by using the guest audio signal as a reference signal, and performing adaptive filter processing on the first audio signal.

12. The apparatus according to claim 7, further comprising a third audio signal synthesis module configured to:
synthesize and push the first audio signal and the processed mixed audio signal to an audience end.

13. An electronic device, comprising a memory and a processor:
the memory is configured to store instructions executable by the processor;
the processor is configured to execute the instructions to implement steps of:
obtaining a first audio signal formed by mixing a guest audio signal with a background audio signal of the live streamer end;
obtaining a processed first audio signal by performing echo cancellation on the guest audio signal in the first audio signal according to the guest audio signal;
detecting a voice activity state of a guest end according to the guest audio signal, the first audio signal and the processed first audio signal;
obtaining a processed mixed audio signal by performing echo cancellation on the first audio signal in a mixed audio signal according to the voice activity state and the first audio signal, wherein the mixed audio signal is a signal consisted of the first audio signal and a live streamer audio signal collected by a microphone of the live streamer end;
synthesizing and pushing the processed first audio signal and the processed mixed audio signal to the guest end.

14. The device according to claim 13, wherein said detecting the voice activity state of the guest end according to the guest audio signal, the first audio signal and the processed first audio signal, comprises:
calculating guest audio energy, first audio energy and processed first audio energy respectively according to the guest audio signal, the first audio signal and the processed first audio signal;
detecting that the voice activity state is a mute state in response to determining that the guest audio energy is less than a first threshold and a ratio of the processed first audio energy to the first audio energy is greater than a second threshold;
detecting that the voice activity state is a voice state in response to determining that the guest audio energy is greater than the first threshold or the ratio of the processed first audio energy to the first audio energy is less than the second threshold.

15. The device according to claim 14, wherein said obtaining the processed mixed audio signal by performing echo cancellation on the first audio signal in the mixed audio signal according to the voice activity state and the first audio signal, comprises:
filtering the first audio signal in the mixed audio signal by using the first audio signal as a reference signal and performing adaptive filter processing on the mixed audio signal in response to detecting that the voice activity state is the mute state.

16. The device according to claim 14, wherein said obtaining the processed mixed audio signal by performing echo cancellation on the first audio signal in the mixed audio signal according to the voice activity state and the first audio signal, comprises:
obtaining a filtered mixed audio signal by using the first audio signal as a reference signal and performing adaptive filter processing on the mixed audio signal in response to detecting that the voice activity state is the voice state;
eliminating a residual echo signal from the filtered mixed audio signal by performing non-linear processing on the filtered mixed audio signal.

17. The device according to claim 13, wherein said obtaining the processed first audio signal by performing echo cancellation on the guest audio signal in the first audio signal, comprises:
obtaining the processed first audio signal by using the guest audio signal as a reference signal, and performing adaptive filter processing on the first audio signal.

18. The device according to claim 13, wherein after obtaining the processed mixed audio signal by performing echo cancellation on the first audio signal in the mixed audio signal according to the voice activity state and the first audio signal, the steps further comprise:
synthesizing and pushing the first audio signal and the processed mixed audio signal to an audience end.

19. A computer readable storage medium carrying a computer instruction program that, when executed by a processor, implements steps of the method of any one of claims 1-6.
